# FASCICULE DE BREVET EUROPEEN

(11) **EP 3 414 475 B1**
(45) Date de publication et mention de la délivrance du brevet: **08.04.2020**
(21) Numéro de dépôt: 17703178.8
(22) Date de dépôt: 09.02.2017
(51) Int. Cl.: F16J 15/16, F16J 15/3228, F16J 15/3264

(54) **DISPOSITIF D'ETANCHEITE AMELIORE, NOTAMMENT EN REGARD D'UNE CONTAMINATION PAR DES AGENTS EXTERIEURS**
VERBESSERTE DICHTUNGSVORRICHTUNG, INSBESONDERE IM HINBLICK AUF EINE KONTAMINATION DURCH EXTERNE AGENTEN
IMPROVED SEALING DEVICE, NOTABLY WITH REGARD TO CONTAMINATION BY EXTERNAL AGENTS

(30) Priorité: 09.02.2016 FR 1651017
(43) Date de publication de la demande: 19.12.2018
(73) Titulaire: Carl Freudenberg KG, 69469 Weinheim (DE)
(72) Inventeur: LUTAUD, Charlie, 52360 Orbigny Au Mont (FR); FORTE, Olivier, 10200 Bar Sur Aube (FR); LUTAUD, Dominique, 52160 Auberive (FR)
(74) Mandataire: Cabinet Nuss
(86) Numéro de dépôt international: PCT/EP2017/052818
(87) Numéro de publication internationale: WO 2017/137475

(56) Documents cités:
- EP-A1- 2 913 566
- DE-A1- 10 259 400
- DE-A1-102015 210 017
- FR-A3- 2 927 395
- US-A1- 2013 200 575

## Description

La présente invention concerne le domaine des équipements pour installations, machines, véhicules ou analogues comprenant une pièce rotative ou tournante, tel qu'un arbre ou un axe, qu'il y a lieu d'étanchéifier au niveau d'un orifice, d'un passage, d'un palier ou analogue.

Plus précisément, la présente invention a pour objet un dispositif d'étanchéité amélioré, en particulier en regard d'une contamination par des agents extérieurs.

Dans le contexte des pièces tournantes rotatives, comme par exemple un arbre ou un axe sortant d'un carter moteur ou d'un arbre porté et guidé dans un palier, l'étanchéité entre le milieu intérieur à préserver, dans lequel réside généralement un fluide lubrifiant, et le milieu extérieur est réalisé couramment par un joint statique circulaire dont au moins une lèvre souple est en appui glissant sur l'arbre. De tels joints sont par exemple connus par les documents FR 2 986 598, EP 2 044 351, EP 2 895 773 et EP 2 739 885.

Toutefois, pour les environnements particulièrement chargés en agents, substances et matériaux polluants pour le milieu intérieur à préserver, il est également connu d'associer aux dispositifs de joints du type précité des éléments d'étanchéité ou des moyens de protection complémentaires en vue de protéger le passage d'arbre et le joint d'étanchéité en place (étanchéité pour les fluides intérieurs) contre les contaminants extérieurs (eau, boue, poussières, ...).

A titre d'exemples, de tels éléments et moyens additionnels connus on peut citer les lèvres pare-poussières fixes (sans contact, mais présence d'un interstice laissant passer les contaminants près de la surface de l'arbre) et les joints à lèvres labyrinthe, généralement en fibres non-tissées (en contact avec l'arbre tournant, donc pertes importantes par frottements).

On connait également des moyens formant ventilateur ou soufflante, sous la forme d'une roue à ailettes spécifique montée sur l'arbre rotatif, en amont et à distance du joint, pour repousser les contaminants en créant un flux d'air de refoulement (voir par exemple : GB 2123498, CN 202469005U ).

Dans les différents cas précités, il s'agit de structures supplémentaires spécifiques n'interagissant pas, ni ne coopérant avec le joint en place et entraînant par contre un surcoût, un encombrement, un poids et une complexité constructive additionnels importants.

En regard des limitations ci-dessus de l'état de la technique, l'invention a pour but essentiel de fournir une solution combinée d'étanchéité et de protection contre les contaminants, qui soit performante, simple, peu coûteuse, et qui ne génère au plus que des pertes faibles.

A cet effet, l'invention a pour objet un dispositif d'étanchéité pour arbre ou axe rotatif selon la revendication 1. Celui-ci comprend un joint d'étanchéité monté fixe dans un passage ou un orifice traversé par ledit arbre ou axe, fournissant une barrière étanche entre un milieu intérieur et un milieu extérieur et constitué, d'une part, par un corps support sous la forme d'une bague porteuse avec une aile axiale extérieure et une aile radiale, préférentiellement à section en L, et d'autre part, par une rondelle d'étanchéité qui est rapporté sur la bague porteuse, entoure l'aile axiale sur le pourtour extérieur de ladite bague et s'étend vers l'intérieur, en direction de l'arbre de l'axe rotatif à étancher, le long de la face de l'aile radiale tournée vers le milieu extérieur, pour se terminer par une lèvre d'étanchéité s'étendant au-delà du bord intérieur de l'aile radiale et en appui glissant sur ledit arbre ou axe, ledit dispositif d'étanchéité comprenant également un moyen supplémentaire de protection contre les contaminants extérieurs, en particulier du type poussières, eau ou boue,
dispositif d'étanchéité caractérisé en ce que le moyen supplémentaire de protection contre les contaminants extérieurs comprend une bague additionnelle qui est solidaire de l'arbre ou de l'axe rotatif, qui est disposé du côté extérieur par rapport au joint d'étanchéité et qui comporte une aile radiale formant par coopération avec l'aile radiale de la bague porteuse du joint d'étanchéité une structure annulaire à chicanes ou labyrinthique, et en ce que la face de l'aile radiale de la bague additionnelle, tournée vers le joint d'étanchéité, est en contact glissant discontinu ou localisé, préférentiellement linéaire, avec la partie de la rondelle d'étanchéité recouvrant l'aile radiale de la bague porteuse du joint d'étanchéité, la partie précitée de la rondelle d'étanchéité comportant en surface au moins une structure en relief et/ou en creux venant en contact, au moins sous une pression légère, avec une zone plane correspondante de la face en regard de l'aile radiale de la bague additionnelle, et/ou la face concernée de l'aile radiale de la bague additionnelle comportant en surface au moins une structure en relief et/ou en creux venant en contact, au moins sous une pression légère, avec une zone plane de la face en regard de la partie de la rondelle recouvrant l'aile radiale de la bague porteuse.

L'invention sera mieux comprise, grâce à la description ci-après, qui se rapporte à des modes de réalisation préférés, donnés à titre d'exemples non limitatifs, et expliqués avec référence aux dessins schématiques annexés, dans lesquels :
la figure 1 est une vue partielle en coupe, selon un plan contenant l'axe de rotation, d'un arbre traversant une ouverture, un dispositif d'étanchéité selon l'invention (représenté schématiquement) étant arrangé entre l'arbre et le passage de l'ouverture ;
la figure 2A est une vue en élévation selon la direction X, parallèle à l'axe de rotation de l'objet représenté figure 1 ;
la figure 2B est une vue partielle en coupe et en perspective, à une échelle différente, du dispositif d'étanchéité des figures 1 et 2A ;
les figures 3A et 3B sont des vues, à une échelle différente, du détail A de la figure 1, montrant deux variantes d'un premier mode de réalisation du dispositif de joint selon l'invention ;
les figures 4A et 4B sont des vues, à une échelle différente, du détail A de la figure 1, montrant un mode de réalisation du dispositif de joint qui ne fait pas partie de l'invention, respectivement en élévation frontale (figure 4A) et en perspective (figure 4B) ;
les figures 5A et 5B sont des vues, à une échelle différente, du détail A de la figure 1, montrant un deuxième mode de réalisation du dispositif de joint selon l'invention, respectivement en élévation frontale (figure 5A) et en perspective (figure 5B) ;
les figures 6A et 6B sont des vues en élévation frontale du détail A de la figure 1 illustrant chacune une variante différente d'un mode de réalisation du dispositif d'étanchéité qui ne fait pas partie de l'invention (le passage étanchéifié n'étant pas représenté), et,

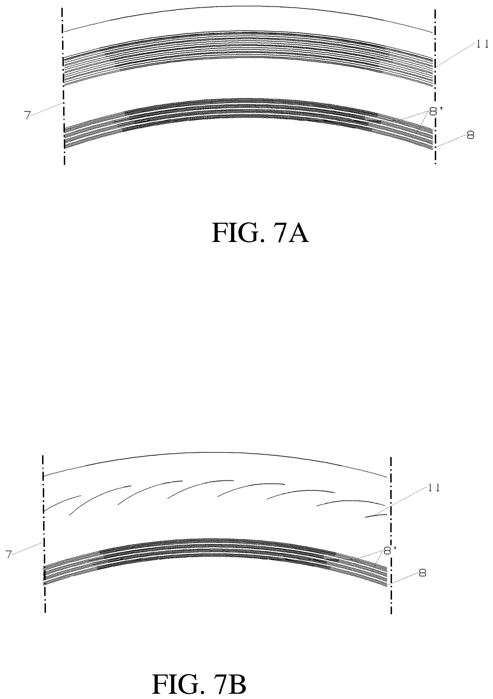

les figures 7A et 7B sont des vues schématiques et partielles en élévation plane de la face structurée de deux variantes de réalisation d'une rondelle d'étanchéité destinée à être rapportée sur une bague support d'un dispositif de joint selon l'invention.

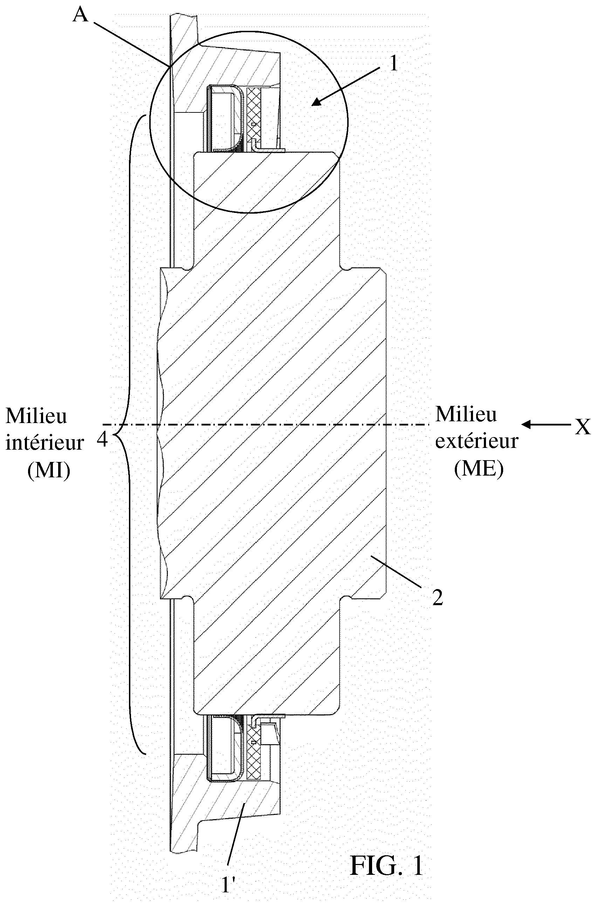

Les figures 1 à 6 montrent un dispositif d'étanchéité 1 pour arbre ou axe rotatif 2, comprenant un joint d'étanchéité 3 monté fixe dans un passage ou un orifice 4 traversé(e) par ledit arbre ou axe, fournissant une barrière étanche entre un milieu intérieur et un milieu extérieur (voir figure 1).

Cette délimitation entre milieux intérieur MI et extérieur ME résulte, par exemple, de la présence d'une paroi de carter 1' dans laquelle est ménagé le passage 4.

Ce joint 3 est constitué, d'une part, par un corps support 5 sous la forme d'une bague porteuse avec une aile axiale 6 extérieure et une aile radiale 6', donc préférentiellement à section en L, et d'autre part, par une rondelle d'étanchéité 7 qui est rapporté sur la bague porteuse 5, entoure l'aile axiale 6 sur le pourtour extérieur de ladite bague 5 et s'étend vers l'intérieur, le long de la face de l'aile radiale 6' tournée vers l'extérieur, pour se terminer par une lèvre d'étanchéité 8 en appui glissant sur l'arbre ou l'axe rotatif 2 à étancher.

Ce dispositif d'étanchéité 1 comprend également un moyen de protection contre les contaminants extérieurs, en particulier du type poussières, eau ou boue.

Conformément à l'invention, le moyen de protection 9 contre les contaminants extérieurs comprend une bague additionnelle qui est solidaire de l'arbre ou de l'axe rotatif 2, qui est disposé du côté extérieur par rapport au joint d'étanchéité 3 et qui comporte une aile radiale 10 formant par coopération avec l'aile radiale 6' de la bague porteuse 5 du joint d'étanchéité 3 une structure annulaire à chicanes ou labyrinthique.

Ainsi, grâce à une mesure technique simple, l'invention permet de fournir un écran de protection rotatif 9 couvrant extérieurement le joint 3 et efficace contre les contaminants, solides et liquides en particulier, non seulement du fait de sa seule présence obstructrice, mais également du fait de sa coopération de forme intime avec le joint 3 et le passage 4.

De manière avantageuse, la bague additionnelle 9 formant déflecteur annulaire est montée de manière étanche sur l'arbre ou l'axe rotatif 2. Selon l'invention son aile radiale 10 s'étend radialement vers l'extérieur jusqu'à une faible distance de la face interne 4' du passage de l'orifice 4, préférentiellement dans un plan P parallèle au plan P' contenant l'aile radiale 6' du joint d'étanchéité 3.

Un tel agencement réduit notablement la progression des contaminants extérieurs vers le joint 3 en empêchant toute introduction de contaminants le long de la surface de l'arbre ou de l'axe 2 et en limitant très fortement, voire en combattant activement l'introduction de tels contaminants le long de la face interne 4' du passage ou de l'ouverture circulaire 4 (la distance en cette dernière et le pourtour circulaire extérieur de l'aile annulaire 10 étant avantageusement inférieure à 1mm, préférentiellement de l'ordre de quelques centièmes à quelques dixièmes de millimètres).

Contrairement à l'invention, la face 10' de l'aile radiale 10 pourrait être située à faible distance du joint 3, sans contact avec l'aile radiale 6' de la bague 5 recouverte par la rondelle 7.

Il se crée alors un volume interstitiel annulaire 15 renfermant une lame d'air.

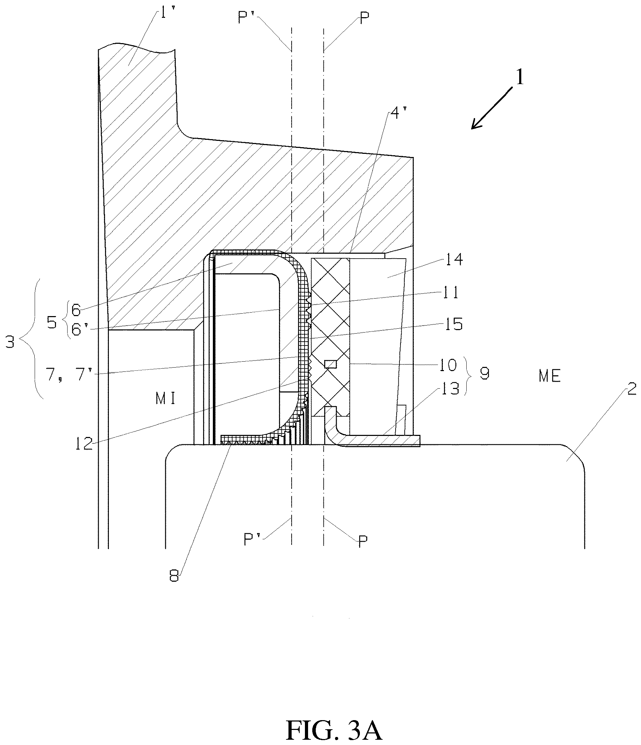

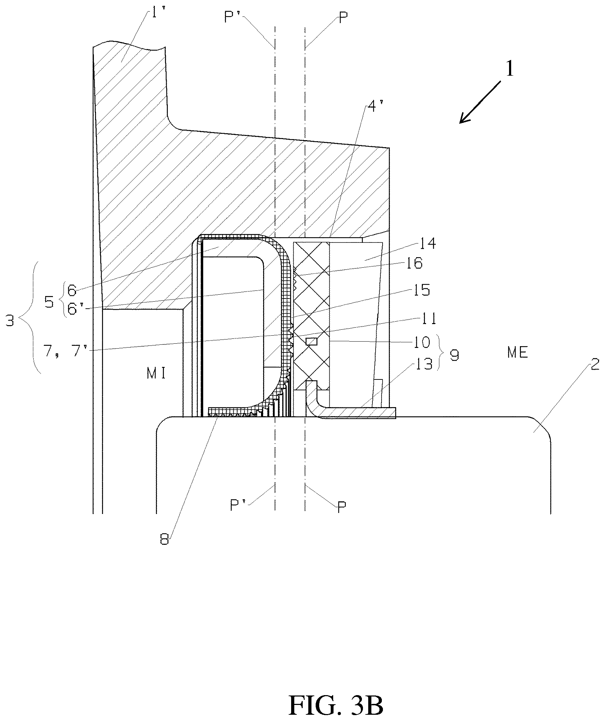

Toutefois, en accord avec l'invention, et comme cela ressort des figures 3 à 6, il est prévu que la face 10' de l'aile radiale 10 de la bague additionnelle 9, tournée vers le joint d'étanchéité 3, soit en contact glissant discontinu ou localisé, préférentiellement linéaire, avec la partie 7' de la rondelle 7 d'étanchéité recouvrant l'aile radiale 6' de la bague porteuse 5 du joint d'étanchéité 3.

Grâce à cette disposition, une étanchéité additionnelle est réalisée entre la bague additionnelle 9 et le joint d'étanchéité 1, laquelle bloque l'accès à la région critique d'étanchéité dynamique constitué par la zone de contact glissant entre la lèvre d'étanchéité 8 et la surface de l'arbre ou de l'axe rotatif 2 contre laquelle elle vient en appui.

De plus, cette disposition de l'invention permet, en outre, dans le contexte d'un joint 3 tel qu'évoqué précédemment et par exemple divulgué par les dépôts FR 2 986 598, EP 2 044 351 et EP 2 739 885 au nom de la demanderesse, d'exploiter avantageusement la partie 7' de la rondelle 7, jusque-là non utilisée dans un contexte d'étanchéisation ou de fonction barrière dans l'état de la technique.

En outre, en prévoyant une zone de contact préférentiellement linéaire, ou à tout le moins discontinue, on limite les pertes dues aux frottements, en particulier lorsque les matériaux en contact permettent d'aboutir à un coefficient de friction faible.

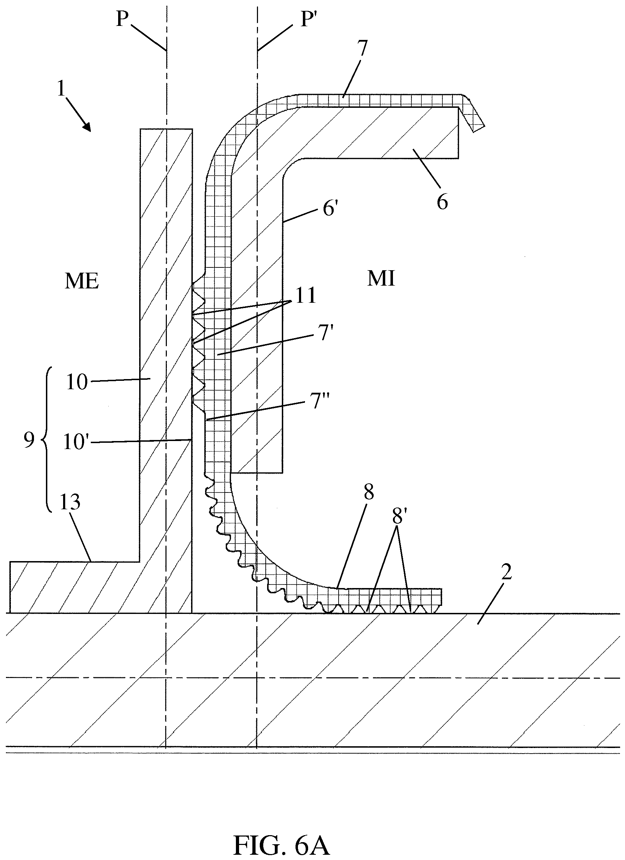

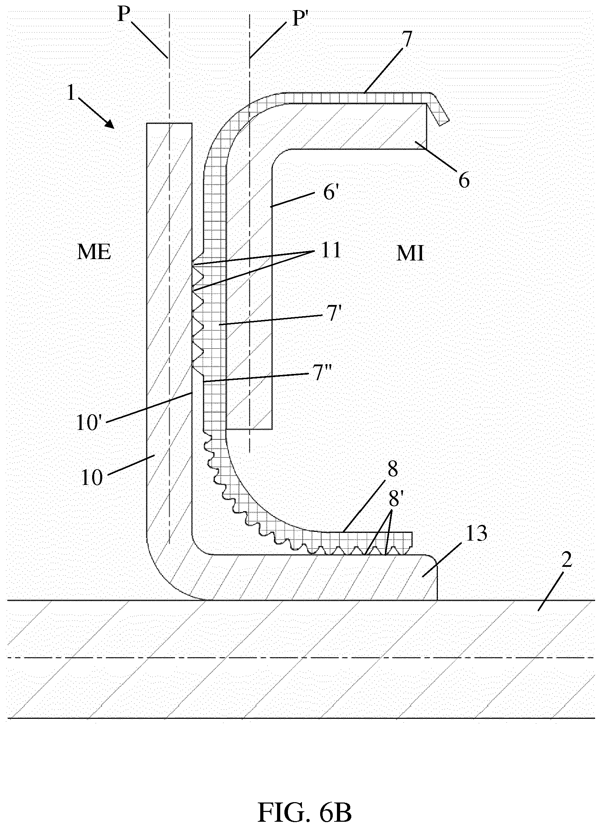

En accord avec une première variante de réalisation de la rondelle d'étanchéité de l'invention, illustré par exemple aux figures 6A et 6B, la partie 7' considérée rondelle d'étanchéité 7 comporte en surface au moins une structure en relief et/ou en creux 11 venant en contact, au moins sous une pression légère, avec une zone plane correspondante de la face 10' en regard de l'aile radiale 10 de la bague additionnelle 9.

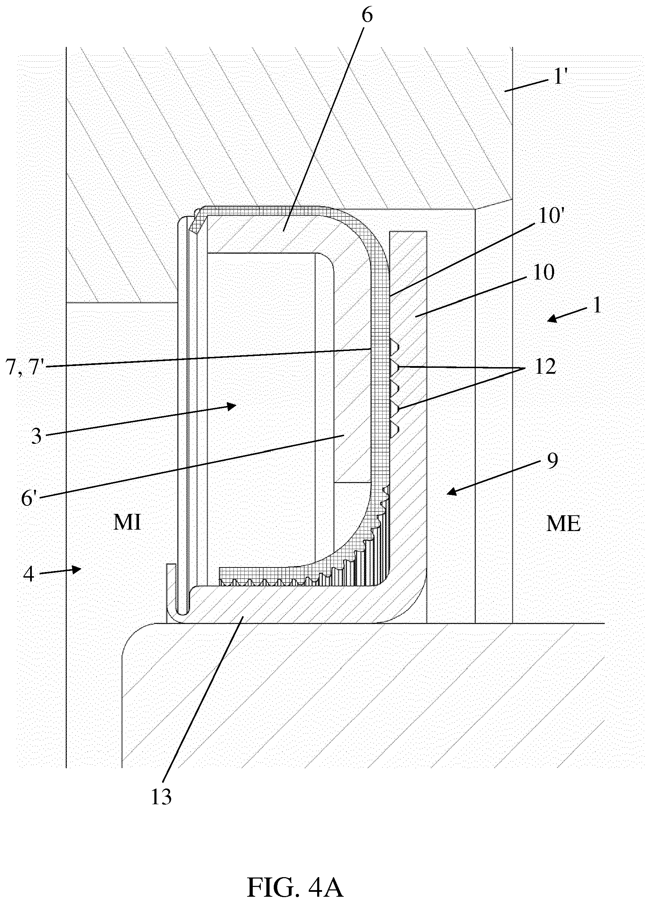

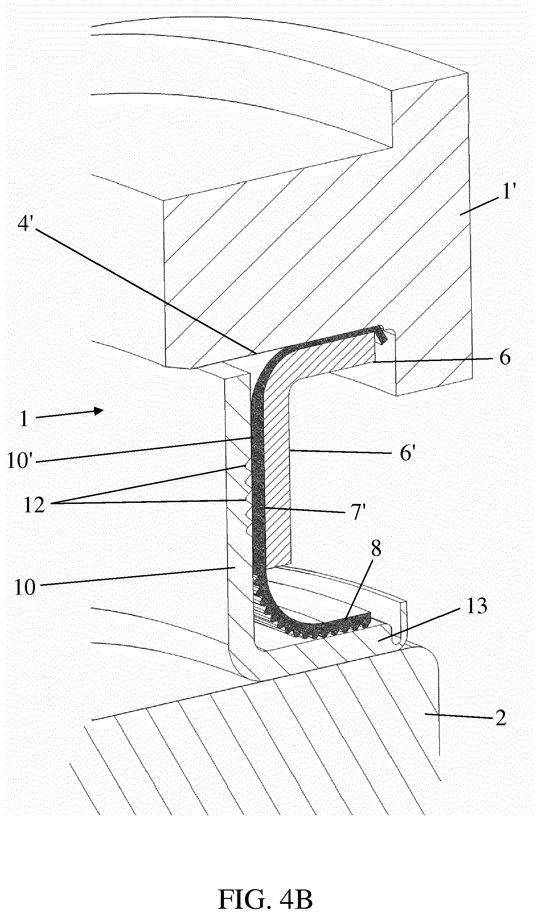

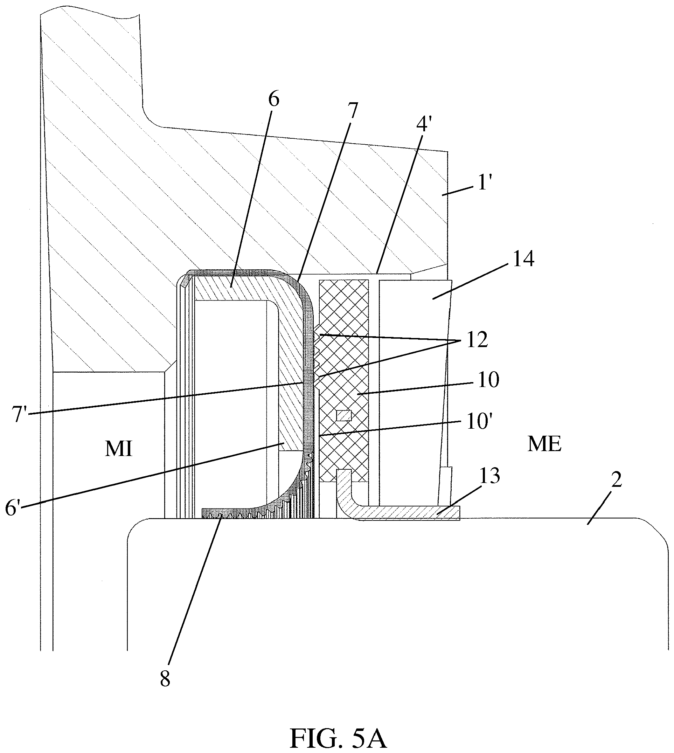

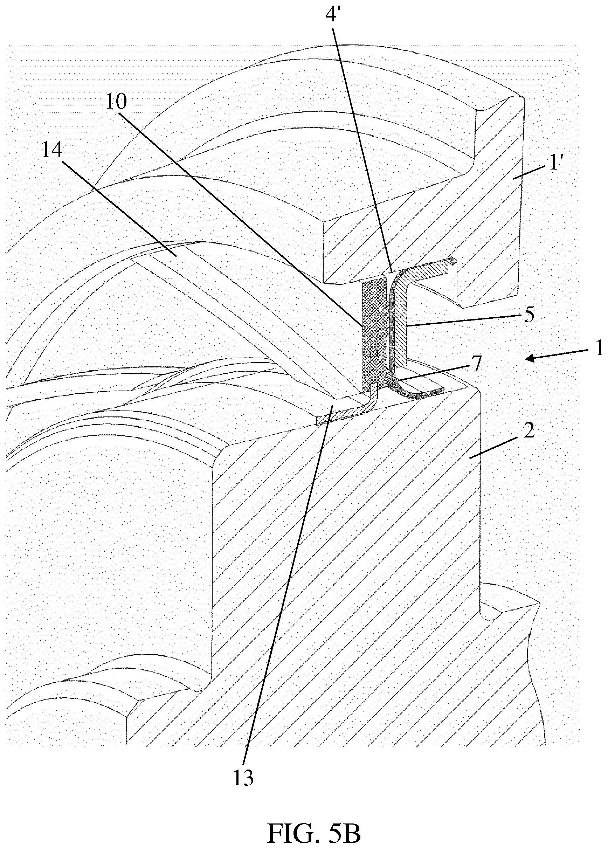

En accord avec une seconde variante de réalisation de la face de l'aile radiale 10 de l'invention, dont deux alternatives sont représentées aux figures 4 et 5, la face 10' concernée de l'aile radiale 10 de la bague additionnelle 9 comporte en surface au moins une structure 12 en relief (figures 5) et/ou en creux (figures 4) venant en contact, au moins sous une pression légère, avec une zone plane de la face 7" en regard de la partie 7' de la rondelle 7 recouvrant l'aile radiale 6' de la bague porteuse 5.

Cette ou ces structures peuvent venir de moulage ou être obtenues par formage ou estampage.

Lorsqu'elles sont formées en creux (figures 4), ce sont les parties des structures 11, 12 restant affleurantes avec la surface de l'aile 10 ou de la rondelle 7 qui constituent les zones de contact (elles sont alors avantageusement de niveau avec les zones de surface non pourvues de structure et également en contact).

Les deux dispositions précitées peuvent également être mises en œuvre simultanément et cumulativement.

Dans ce cas, et selon un mode de réalisation de l'invention combinant les deux variantes précitées et représenté à la figure 3A, à titre d'exemple, il peut être prévu que des structures en relief et/ou en creux 11,12 sont prévues sur la partie 7' de rondelle d'étanchéité 7 considérée et sur l'aile radiale 10 de la bague additionnelle 9, les deux structures 11 et 12 étant situées dans des régions circonférentielles annulaires distinctes, non chevauchantes, situées à des distances différentes autour de l'arbre ou de l'axe rotatif 2.

Bien entendu, différentes configurations et conformations peuvent être envisagées pour les deux types de structure(s) en relief 11 et 12.

Ainsi, il peut être prévu une structure d'un seul tenant ou une pluralité de structures séparées, arrangées selon un motif déterminé. De même, la section transversale du tracé (nervure, rainure) de la structure peut être constante ou non, et présenter des formes privilégiant une zone de contact limitée (par exemple : section semi-circulaire, triangulaire, rectangulaire, carvée de faible largeur).

Conformément à une variante de réalisation pratique, la ou l'une au moins des structure(s) en relief et/ou en creux 11, 12 consiste en une spirale (hélicoïdale). Le sens d'enroulement de l'extérieur vers l'intérieur de cette spirale correspond au sens de rotation de l'arbre ou de l'axe rotatif 2, pour une structure 12 sur la bague 9, et au sens anti-rotatoire pour une structure 11 sur la rondelle 7.

Ainsi, le sens de rotation du tracé de la spirale d'une structure 11 faisant partie de la rondelle 7, de l'intérieur vers l'extérieur, est identique au sens de rotation de l'arbre ou de l'axe 2. Pour une structure 12, le sens est opposé.

Une telle structure 11 ou 12 génère lors de la rotation une action d'éjection centrifuge, en plus de sa fonction barrière multicouche.

Selon une autre variante de réalisation, en accord avec une construction fragmentée des structures 11 et/ou 12, la ou l'une au moins desdites structures 11, 12 en relief ou en creux consiste en un arrangement annulaire de pales ou de sillons individuel(le)s orienté(e)s et mutuellement partiellement chevauchant(e)s, entre pales ou sillons voisin(e)s de l'arrangement.

Conformément à une autre variante de réalisation pratique, ne réalisant pas spécifiquement une action d'éjection, la ou l'une au moins des structure(s) en relief et/ou en creux 11, 12 consiste en un motif d'au moins deux nervures ou rainures circulaires concentriques (obtention de plusieurs barrières successives dans la direction radiale).

En plus de la ou des structures 11, 12 évoquées ci-dessus, ou alternativement par rapport à celle(s)-ci, il peut être prévu que l'aile radiale 10 de la bague additionnelle 9 comporte, sur sa face 10' située en regard et à distance de l'aile radiale 6' de la bague porteuse 5 recouverte par la rondelle d'étanchéité 7, une ou plusieurs formations 16 en relief et/ou en creux apte(s) à générer, lors de la rotation de l'arbre 2 et donc de la bague additionnelle 9, un flux d'air centrifuge dans l'espace interstitiel 15 entre le joint d'étanchéité 1 et ladite bague additionnelle 9 (voir figure 3B). Cette ou ces formation(s) 16 peu(ven)t par exemple présenter des formes similaires à celles des structures 11 et 12 (pales, spirales, ...).

Des structures 11, 12 remplissant les deux fonctions (barrière et génération de flux d'air), c'est-à-dire partiellement en contact avec la face en regard, peuvent également être prévues.

De plus, la partie 7' de la rondelle 7 peut comporter, situées à des distances différentes de l'axe ou de l'arbre 2, au moins deux formations 11 distinctes, de même type ou non. En variante, la face 10' de l'aile radiale 10 de la bague 9 peut comporter au moins deux formations 12 distinctes, de même type ou non, présentant des diamètres annulaires différents.

La lèvre d'étanchéité 8, pour réaliser l'étanchéité dynamique, vient normalement en application directe sur l'arbre ou l'axe rotatif 2, préférentiellement par une face de son extrémité libre pourvue d'une structure de refoulement (voir à titre d'exemple de réalisation le document FR 2 986 598), comme le montrent les figures 3, 5 et 6A.

En variante, non-revendiquée, cette lèvre 8 peut également venir en application contre un élément rapporté sur ledit arbre ou axe 2.

Comme le montre la figure 6B et les figures 4, l'aile axiale 13, en application étanche autour et contre l'arbre ou l'axe rotatif 2 peut réaliser un chemisage extérieur axialement limité de ce dernier, ladite aile axiale 13 s'étendant le long dudit arbre ou axe 2 au-delà du plan P' contenant l'aile radiale 6' de la bague porteuse 5 et formant surface d'appui glissant pour la lèvre d'étanchéité 8 du joint d'étanchéité 1.

Dans les deux variantes précitées, il peut ainsi être prévu qu'au moins la face de la partie de la lèvre d'étanchéité 8 venant en appui souple sur l'arbre 2 ou sur l'aile axiale 13 de la bague additionnelle 9, comporte une structure de refoulement 8', par exemple à profil en dents de scie en section et à extension hélicoïdale autour du pourtour interne de la rondelle d'étanchéité 8.

Le sens d'enroulement de la spirale 8' formée par la structure de refoulement est identique à celui des formations 11 de la rondelle 7.

En vue de produire, de manière supplémentaire, une action dynamique de refoulement ou de répulsion en amont du moyen de protection 9 et de fournir une étanchéité active par circulation d'air entre ce dernier et le passage ou l'ouverture 4, selon l'invention la bague additionnelle 9 comporte sur la face de son aile radiale 10 opposée au joint d'étanchéité 7 ou tournée vers l'extérieur et/ou sur le pourtour extérieur de cette aile 10, une pluralité de formations 14, en relief ou en creux, préférentiellement réparties circonférentiellement de manière homogène.

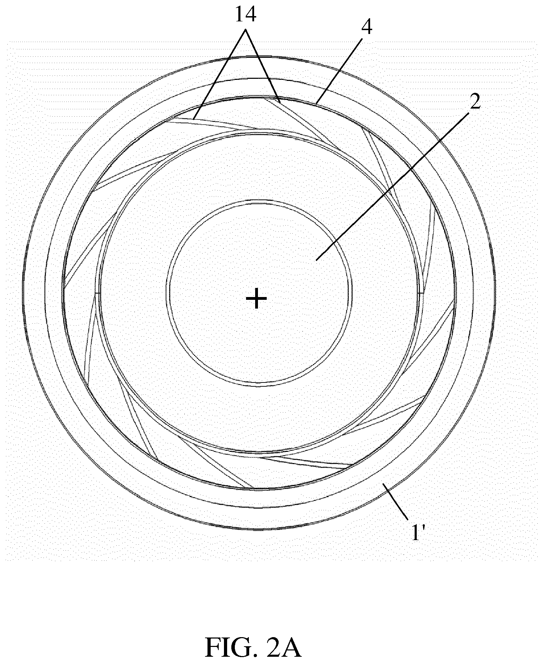

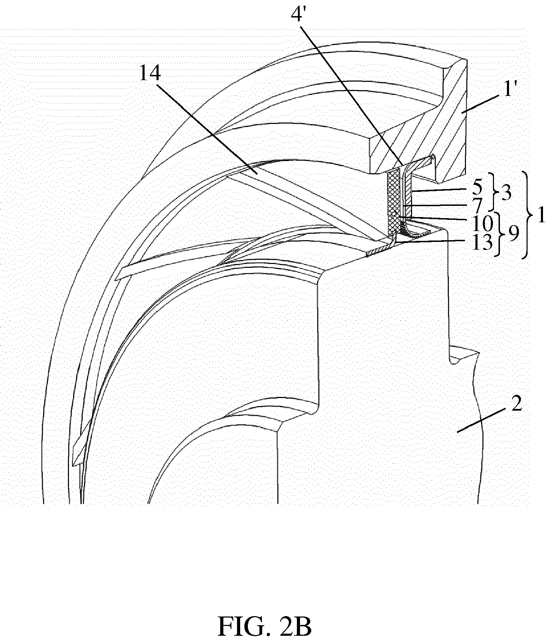

Ces formations 14, illustrées par exemple sur les figures 2, 3 et 5, sont aptes et destinées à générer un flux d'air lors de la rotation de l'arbre ou de l'axe 2, avantageusement un vortex orienté de manière à s'opposer à l'introduction de contaminants extérieurs dans l'interstice entre ladite bague additionnelle 9 et la face interne 4' de la paroi du passage ou de l'orifice 4.

Comme cela ressort des figures 2, 3 et 5 des dessins annexés ces formations 14 peuvent par exemple consister en des ailettes. Toutefois, une formation unique, telle qu'une spirale hélicoïdale, apte à générer le flux d'air répulseur peut également être envisagée. De plus, le bord d'entrée de l'orifice ou du passage 4, tournée vers le milieu extérieur, peut éventuellement présenter une conformation ou une configuration spécifique participant au formage ou à l'orientation du flux d'air généré.

L'invention porte également sur les réalisations du dispositif 1 combinant deux ou plusieurs des modes et variantes de réalisation évoqué(e)s précédemment et compatibles entre eux (elles), bien que non représenté(e)s aux dessins annexés. L'invention n'étant définie que par les revendications en annexe.

De manière avantageuse, la rondelle d'étanchéité 7 est réalisée en PTFE (Polytétrafluoroéthylène), permettant un contact glissant avec un très faible frottement et ne nécessitant aucune lubrification (donc adapté à des vitesses de rotation élevées), et la bague porteuse 5 est réalisée en tôle du type HLE.

La bague additionnelle 9 peut par exemple, comme le montrent les figures, être composée de deux parties, à savoir une embase annulaire métallique (tôle) formant l'aile axiale 13 et emboîtée intimement sur l'arbre 2 et un disque annulaire en un matériau plastique formant l'aile radiale 10, surmoulé sur l'embase et comportant les structures 12 et formations 14 éventuelles, préférentiellement venues de moulage.

La tôle formant chacune des bagues 5 et 9 peut être de l'acier usiné ou embouti dans différentes qualités de feuillard (DCO4 et HLE par exemple), en tôle inox ou en tôle revêtue d'un traitement anti-corrosion.

Bien entendu, l'invention n'est pas limitée aux modes de réalisation décrits et représentés aux dessins annexés. Des modifications restent possibles, notamment du point de vue de la constitution des divers éléments ou par substitution d'équivalents techniques, sans sortir pour autant du domaine de protection de l'invention, ce dernier étant défini par les revendications en annexe.

## Revendications

1. Dispositif d'étanchéité (1) pour arbre ou axe rotatif (2), comprenant un joint d'étanchéité (3) destiné à être monté fixe dans un passage ou un orifice (4) traversé par ledit arbre ou axe (2), fournissant une barrière étanche entre un milieu intérieur (MI) et un milieu extérieur (ME) et constitué, d'une part, par un corps support (5) sous la forme d'une bague porteuse avec une aile axiale (6) extérieure et une aile radiale (6'), préférentiellement à section en L, et d'autre part, par une rondelle d'étanchéité (7) qui est rapportée sur la bague porteuse (5), entoure l'aile axiale (6) sur le pourtour extérieur (5') de ladite bague (5) et s'étend vers l'intérieur, en direction de l'arbre ou de l'axe rotatif à étancher (2), le long de la face de l'aile radiale (6') tournée vers le milieu extérieur (ME), pour se terminer par une lèvre d'étanchéité (8) s'étendant au-delà du bord intérieur de l'aile radiale (6') et en appui glissant sur ledit arbre ou axe (2),
dispositif d'étanchéité (1) **caractérisé**
**en ce que** ledit dispositif d'étanchéité (1) comprend également un moyen supplémentaire (9) de protection contre les contaminants extérieurs, en particulier du type poussières, eau ou boue,
**en ce que** ce moyen supplémentaire de protection (9) contre les contaminants extérieurs comprend une bague additionnelle qui est destinée à être solidaire de l'arbre ou de l'axe rotatif (2), qui est disposé du côté extérieur par rapport au joint d'étanchéité (3) et qui comporte une aile radiale (10) formant par coopération avec l'aile radiale (6') de la bague porteuse (5) du joint d'étanchéité (3) une structure annulaire à chicanes ou labyrinthique,
**en ce que** l'aile radiale (10) s'étend radialement vers l'extérieur et est apte à s'étendre jusqu'à une faible distance de la face interne (4') du passage de l'orifice (4), préférentiellement dans un plan (P) parallèle au plan (P') contenant l'aile radiale (6') du joint d'étanchéité (3),
**en ce que** la bague additionnelle (9) comporte, sur la face de son aile radiale (10) opposée au joint d'étanchéité (7) ou tournée vers l'extérieur et/ou sur le pourtour extérieur de cette aile (10), une pluralité de formations (14), en relief ou en creux, aptes à générer un flux d'air lors de la rotation de l'arbre ou de l'axe (2), sous la forme d'un vortex orienté de manière à s'opposer à l'introduction de contaminants extérieurs dans l'interstice entre ladite bague additionnelle (9) et la face interne (4') de la paroi du passage ou de l'orifice (4), et
**en ce que** la face (10') de l'aile radiale (10) de la bague additionnelle (9), tournée vers le joint d'étanchéité (3), est en contact glissant discontinu ou localisé, préférentiellement linéaire, avec la partie (7') de la rondelle (7) d'étanchéité recouvrant l'aile radiale (6') de la bague porteuse (5) du joint d'étanchéité (3),
la partie (7') précitée de la rondelle d'étanchéité (7) comportant en surface au moins une structure en relief et/ou en creux (11) venant en contact, au moins sous une pression légère, avec une zone plane correspondante de la face (10') en regard de l'aile radiale (10) de la bague additionnelle (9), et/ou
la face (10') concernée de l'aile radiale (10) de la bague additionnelle (9) comportant en surface au moins une structure en relief et/ou en creux (12) venant en contact, au moins sous une pression légère, avec une zone plane de la face (7") en regard de la partie (7') de la rondelle (7) recouvrant l'aile radiale (6') de la bague porteuse (5).

2. Dispositif d'étanchéité selon la revendication 1, **caractérisé en ce que** des structures en relief et/ou en creux (11,12) sont prévues, d'une part, sur la partie (7') de rondelle d'étanchéité (7) considérée et, d'autre part, sur l'aile radiale (10) de la bague additionnelle (9), les deux structures (11 et 12) étant situées dans des régions circonférentielles annulaires distinctes, non chevauchantes, situées à des distances différentes autour de l'arbre ou de l'axe rotatif (2).

3. Dispositif d'étanchéité selon l'une quelconque des revendications 1 et 2, **caractérisée en ce que** la ou l'une au moins des structure(s) en relief et/ou en creux (11, 12) consiste en une spirale.

4. Dispositif d'étanchéité selon l'une quelconque des revendications 1 et 2, **caractérisé en ce que** la ou l'une au moins desdites structures (11, 12) en relief ou en creux consiste en un arrangement annulaire de pales ou de sillons individuel(le)s orienté(e)s et mutuellement partiellement chevauchant(e)s, entre pales ou sillons voisin(e)s de l'arrangement.

5. Dispositif d'étanchéité selon l'une quelconque des revendications 1 à 4, **caractérisé en ce que** l'aile radiale (10) de la bague additionnelle (9) comporte, sur sa face (10') située en regard et à distance de l'aile radiale (6') de la bague porteuse (5) recouverte par la rondelle d'étanchéité (7), une ou plusieurs formations (16) en relief et/ou en creux apte(s) à générer, lors de la rotation de la bague additionnelle (9), un flux d'air centrifuge dans l'espace interstitiel (15) entre le joint d'étanchéité (1) et ladite bague additionnelle (9).

6. Dispositif d'étanchéité selon l'une quelconque des revendications 1 à 5, **caractérisé en ce que** la bague additionnelle (9) formant déflecteur annulaire est montée de manière étanche sur l'arbre ou l'axe rotatif (2).

7. Dispositif d'étanchéité selon l'une quelconque des revendications 1 à 6, **caractérisé en ce que** la bague additionnelle (9) comporte également une aile axiale (13), en application étanche autour et contre l'arbre ou l'axe rotatif (2) et réalisant un chemisage extérieur axialement limité de ce dernier, ladite aile axiale (13) s'étendant le long dudit arbre ou axe (2) au-delà du plan (P') contenant l'aile radiale (6') de la bague porteuse (5) et formant surface d'appui glissant pour la lèvre d'étanchéité (8) du joint d'étanchéité (1).

8. Dispositif d'étanchéité selon l'une quelconque des revendications 1 à 7, **caractérisé en ce que** la pluralité de formations (14) sont réparties circonférentiellement de manière homogène au niveau de l'aile radiale (10) de la bague additionnelle (9).

9. Dispositif d'étanchéité selon l'une quelconque des revendications 1 à 8, **caractérisé en ce qu'**au moins la face de la partie de la lèvre d'étanchéité (8) venant en appui souple sur l'arbre (2) ou sur l'aile axiale (13) de la bague additionnelle (9), comporte une structure de refoulement (8'), par exemple à profil en dents de scie en section et à extension hélicoïdale autour du pourtour interne de la rondelle d'étanchéité (8).

10. Dispositif d'étanchéité selon l'une quelconque des revendications 1 à 9, **caractérisé en ce que** la rondelle d'étanchéité (7) est réalisée en PTFE et **en ce que** la bague porteuse (5) est réalisée en tôle du type HLE.

## Patentansprüche

1. Dichtungsvorrichtung (1) für eine Welle oder Drehachse (2), umfassend eine Dichtung (3) zur festen Anordnung in einer von der Welle oder Drehachse (2) durchgriffenen Durchführung oder Öffnung (4), wobei die Dichtung (3) eine dichte Barriere zwischen einem inneren Medium (MI) und einem äußeren Medium (ME) bereitstellt und einerseits von einem Stützkörper (5) in Form eines Tragrings mit einem äußeren axialen Flügel (6) und einem radialen Flügel (6'), die vorzugsweise einen L-förmigen Querschnitt aufweisen, und andererseits von einer Dichtungsscheibe (7) gebildet ist, die an dem Tragring (5) angebracht ist, den axialen Flügel (6) am äußeren Umfang (5') des Tragrings (5) umgibt und sich entlang der dem äußeren Medium (ME) zugewandten Fläche des radialen Flügels (6') in Richtung der abzudichtenden Welle oder Drehachse (2) nach innen erstreckt, um in einer Dichtlippe (8) zu enden, die sich über den Innenrand des radialen Flügels (6') hinaus erstreckt und sich gleitend an der Welle oder Drehachse (2) abstützt,
**dadurch gekennzeichnet,**
**dass** die Dichtungsvorrichtung (1) des Weiteren eine ergänzende Schutzeinrichtung (9) gegen äußere Verunreinigungen, insbesondere Staub, Wasser oder Schmutz umfasst,
**dass** die ergänzende Schutzeinrichtung (9) gegen äußere Verunreinigungen einen weiteren Ring zur festen Verbindung mit der Welle oder Drehachse (2) umfasst, der bezogen auf die Dichtung (3) außenseitig angeordnet ist und einen radialen Flügel (10) aufweist, der mit dem radialen Flügel (6') des Tragrings (5) der Dichtung (3) zusammenwirkend eine ringförmige Schikanen- oder Labyrinthstruktur bildet, dass der radiale Flügel (10) sich vorzugsweise in einer Ebene (P), die zu der den radialen Flügel (6') der Dichtung (3) beinhaltenden Ebene (P') parallel verläuft, radial nach außen erstreckt und sich bis in die Nähe der Innenfläche (4') der Durchführung oder Öffnung (4) erstrecken kann,
**dass** der weitere Ring (9) an der der Dichtung (7) gegenüberliegenden oder der Außenseite zugewandten Fläche seines radialen Flügels (10) oder an dem Außenumfang dieses Flügels (10) eine Vielzahl von erhabenen oder vertieften Formationen (14) aufweist, die bei Drehung der Welle oder Drehachse (2) einen Luftstrom in Form eines Wirbels ausbilden können, der einer Eintragsrichtung von äußeren Verunreinigungen in den Zwischenraum zwischen dem weiteren Ring (9) und der Innenfläche (4') der Wand der Durchführung oder Öffnung (4) entgegengerichtet ist, und
**dass** die der Dichtung (3) zugewandte Fläche (10') des radialen Flügels (10) des weiteren Rings (9) diskontinuierlich oder stellenweise, vorzugsweise linear, gleitend an dem Abschnitt (7') der Dichtungsscheibe (7) anliegt, der den radialen Flügel (6') des Tragrings (5) der Dichtung (3) bedeckt,
wobei der genannte Abschnitt (7') der Dichtungsscheibe (7) an der Oberfläche mindestens eine erhabene und/oder vertiefte Struktur (11) aufweist, die zumindest unter leichtem Druck an einem entsprechenden ebenen Bereich der dem radialen Flügel (10) des weiteren Rings (9) gegenüberliegenden Fläche (10') zur Anlage kommt, und/oder
die betreffende Fläche (10') des radialen Flügels (10) des weiteren Rings (9) an der Oberfläche mindestens eine erhabene und/oder vertiefte Struktur (12) aufweist, die zumindest unter leichtem Druck an einem ebenen Bereich der Fläche (7") zur Anlage kommt, die dem Abschnitt (7') der Dichtungsscheibe (7) gegenüberliegt, der den radialen Flügel (6') des Tragrings (5) bedeckt.

2. Dichtungsvorrichtung nach Anspruch 1, **dadurch gekennzeichnet, dass** die erhabenen und/oder vertieften Strukturen (11, 12) einerseits an dem betreffenden Abschnitt (7') der Dichtungsscheibe (7) und andererseits an dem radialen Flügel (10) des weiteren Rings (9) vorgesehen sind, wobei die beiden Strukturen (11 und 12) in verschiedenen, nicht überlappenden, ringförmigen Umfangsbereichen angeordnet sind, die sich in unterschiedlichen Abständen um die Welle oder Drehachse (2) befinden.

3. Dichtungsvorrichtung nach einem der Ansprüche 1 und 2, **dadurch gekennzeichnet, dass** die erhabene und/oder vertiefte Struktur oder mindestens eine der erhabenen und/oder vertieften Strukturen (11, 12) als Spirale ausgebildet ist.

4. Dichtungsvorrichtung nach einem der Ansprüche 1 und 2, **dadurch gekennzeichnet, dass** die erhabene und/oder vertiefte Struktur oder mindestens eine der erhabenen und/oder vertieften Strukturen (11, 12) als eine ringförmige Anordnung von einzelnen ausgerichteten und einander teilweise überlappenden Schaufeln oder Rillen zwischen benachbarten Schaufeln oder Rillen der Anordnung ausgebildet ist.

5. Dichtungsvorrichtung nach einem der Ansprüche 1 bis 4, **dadurch gekennzeichnet, dass** der radiale Flügel (10) des weiteren Rings (9) an seiner Fläche (10'), die dem von der Dichtungsscheibe (7) bedeckten radialen Flügel (6') des Tragrings (5) gegenüberliegt und von diesem beabstandet ist, eine oder mehrere erhabene und/oder vertiefte Formationen (16) aufweist, die bei Drehung des weiteren Rings (9) einen zentrifugalen Luftstrom in dem Zwischenraum (15) zwischen der Dichtung (1) und dem weiteren Ring (9) erzeugen kann bzw. können.

6. Dichtungsvorrichtung nach einem der Ansprüche 1 bis 5, **dadurch gekennzeichnet, dass** der weitere Ring (9), der eine ringförmige Ablenkeinrichtung bildet, dicht an der Welle oder Drehachse (2) angebracht ist.

7. Dichtungsvorrichtung nach einem der Ansprüche 1 bis 6, **dadurch gekennzeichnet, dass** der weitere Ring (9) des Weiteren einen axialen Flügel (13) aufweist, der dicht um die und an der Welle oder Drehachse (2) anliegt und eine von der Welle oder Drehachse (2) axial begrenzte Außenverkleidung bildet, wobei der axiale Flügel (13) sich über die den radialen Flügel (6') des Tragrings (5) beinhaltende Ebene (P') hinaus entlang der Welle oder Drehachse (2) erstreckt und eine Gleitstützfläche für die Dichtlippe (8) der Dichtung (1) bildet.

8. Dichtungsvorrichtung nach einem der Ansprüche 1 bis 7, **dadurch gekennzeichnet, dass** die Vielzahl von Formationen (14) in der Umfangsrichtung gleichmäßig über den radialen Flügel (10) des weiteren Rings (9) verteilt sind.

9. Dichtungsvorrichtung nach einem der Ansprüche 1 bis 8, **dadurch gekennzeichnet, dass** zumindest die Fläche des Abschnitts der Dichtlippe (8), der sich elastisch an der Welle (2) oder an dem axialen Flügel (13) des weiteren Rings (9) abstützt, eine Verdrängungsstruktur (8') aufweist, die im Querschnitt zum Beispiel mit einem sägezahnartigen Profil ausgebildet ist und sich spiralförmig um den Innenumfang der Dichtungsscheibe (8) erstreckt.

10. Dichtungsvorrichtung nach einem der Ansprüche 1 bis 9, **dadurch gekennzeichnet, dass** die Dichtungsscheibe (7) aus PTFE gebildet ist und dass der Tragring (5) aus Blech mit hoher Streckgrenze gebildet ist.

## Claims

1. Sealing device (1) for a rotary shaft or axis (2) comprising a seal (3) intended to be fixedly mounted in a passage or an orifice (4) passed through by said shaft or axis (2), providing a tight barrier between an internal medium (MI) and an external medium (ME) and composed, on the one hand, of a support body (5) in the form of a supporting ring with an outer axial wing (6) and a radial wing (6'), preferentially of L section, and, on the other hand, of a sealing washer (7) which is added onto the supporting ring (5), surrounds the axial wing (6) over the outer perimeter (5') of said ring (5) and extends inwards, towards the rotary shaft or axis to be sealed (2), along the face of the radial wing (6') turned towards the external medium (ME), to end with a sealing lip (8) extending beyond the internal edge of the radial wing (6') and bearing slidingly on said shaft or axis (2),
said sealing device (1) being **characterized in that** said sealing device (1) also comprises an additional means (9) of protection against external contaminants, in particular of dust, water or sludge type,
**in that** this additional means (9) of protection against external contaminants comprises an additional ring which is intended to be secured to the rotary shaft or axis (2), which is disposed on the outside relative to the seal (3) and which comprises a radial wing (10) forming, by cooperation with the radial wing (6') of the supporting ring (5) of the seal (3), a chicaned or labyrinthine annular structure,
**in that** the radial wing (10) extends radially outwards and is adapted to extend to a short distance from the inner face (4') of the passage of the orifice (4), preferentially in a plane (P) parallel to the plane (P') containing the radial wing (6') of the seal (3),
**in that** the additional ring (9) comprises, on the face of its radial wing (10) opposite the seal (7) or turned outwards and/or on the outer perimeter of this wing (10), a plurality of formations (4), in relief or hollowed out, capable of generating an air flow upon the rotation of the shaft or of the axis (2), in the form of a vortex oriented so as to oppose the introduction of external contaminants into the interstice between said additional ring (9) and the inner face (4') of the wall of the passage or of the orifice (4), and
**in that** the face (10') of the radial wing (10) of the additional ring (9), turned towards the seal (3), is in discontinuous or localized sliding contact, preferentially linear with the part (7') of the sealing washer (7) covering the radial wing (6') of the supporting ring (5) of the seal (3),
the abovementioned part (7') of the sealing washer (7) comprising on the surface at least one structure in relief and/or hollowed out (11) coming into contact, at least under a light pressure, with a corresponding flat zone of the face (10') facing the radial wing (10) of the additional ring (9), and/or
the relevant face (10') of the radial wing (10) of the additional ring (9) comprising on the surface at least one structure in relief and/or hollowed out (12) coming into contact, at least under a light pressure, with a flat zone of the face (7") facing the part (7') of the washer (7) covering the radial wing (6') of the supporting ring (5).

2. Sealing device according to Claim 1, **characterized in that** the structures in relief and/or hollowed out (11, 12) are provided, on the one hand, on the relevant part (7') of the sealing washer (7) and, on the other hand, on the radial wing (10) of the additional ring (9), the two structures (11 and 12) being situated in non-overlapping, distinct annular circumferential regions, situated at different distances around the rotary shaft or axis (2).

3. Sealing device according to either one of Claims 1 and 2, **characterized in that** the or the at least one of the structures in relief and/or hollowed out (11, 12) consists of a spiral.

4. Sealing device according to either one of Claims 1 and 2, **characterized in that** the or the at least one of said structures (11, 12) in relief or hollowed out consists of an annular arrangement of oriented and mutually partially overlapping individual blades or furrows, between neighbouring blades or furrows of the arrangement.

5. Sealing device according to any one of Claims 1 to 4, **characterized in that** the radial wing (10) of the additional ring (9) comprises, on its face (10') situated facing and at a distance from the radial wing (6') of the supporting ring (5) covered by the sealing washer (7), one or more formations (16) in relief and/or hollowed out capable of generating, upon the rotation of the additional ring (9), a centrifugal air flow in the interstitial space (15) between the seal (1) and said additional ring (9).

6. Sealing device according to any one of Claims 1 to 5, **characterized in that** the annular deflector-forming additional ring (9) is tightly mounted on the rotary shaft or axis (2).

7. Sealing device according to any one of Claims 1 to 6, **characterized in that** the additional ring (9) also comprises an axial wing (13), tightly pressed around and against the rotary shaft or axis (2) and producing an axially limited outer lining thereof, said axial wing (13) extending along said shaft or axis (2) beyond the plane (P') containing the radial wing (6') of the supporting ring (5) and forming a sliding bearing surface for the sealing lip (8) of the seal (1).

8. Sealing device according to any one of Claims 1 to 7, **characterized in that** the plurality of formations (14) are distributed circumferentially uniformly at the level of the radial wing (10) of the additional ring (9) .

9. Sealing device according to any one of Claims 1 to 8, **characterized in that** at least the face of the part of the sealing lip (8) coming to bear flexibly on the shaft (2) or on the axial wing (13) of the additional ring (9), comprises a discharge structure (8'), for example with sawtooth profile in section and with helical extension around the inner perimeter of the sealing washer (8).

10. Sealing device according to any one of Claims 1 to 9, **characterized in that** the sealing washer (7) is made of PTFE and **in that** the supporting ring (5) is made of HLE-type sheet.
